(19) Europäisches Patentamt
European Patent Office
Office européen des brevets

(11) **EP 1 782 553 B1**

(12) **EUROPEAN PATENT SPECIFICATION**

(45) Date of publication and mention
of the grant of the patent:
**13.05.2009 Bulletin 2009/20**

(21) Application number: **04764569.2**

(22) Date of filing: **27.08.2004**

(51) Int Cl.:
*H04B 7/06* *(2006.01)*     *H04B 7/08* *(2006.01)*
*H04L 1/06* *(2006.01)*     *H04L 27/26* *(2006.01)*

(86) International application number:
**PCT/EP2004/009595**

(87) International publication number:
**WO 2006/021227 (02.03.2006 Gazette 2006/09)**

(54) **APPARATUS AND METHOD FOR OBTAINING DELAY DIVERSITY**

VORRICHTUNG UND VERFAHREN ZUM ERHALTEN VON VERZÖGERUNGS-DIVERSITY

APPAREIL ET PROCEDE POUR OBTENIR UNE DIVERSITE DE RETARDS

(84) Designated Contracting States:
**DE GB**

(43) Date of publication of application:
**09.05.2007 Bulletin 2007/19**

(73) Proprietor: **NTT DoCoMo, Inc.**
**Tokyo (JP)**

(72) Inventor: **BAUCH, Gerhard**
**80799 München (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**WO-A-02/25857**          **WO-A-20/04025874**
**US-A1- 2004 087 294**     **US-B1- 6 377 632**

**Description**

The present invention is in the field of telecommunications and in particular in the field of diversity techniques.

In wireless communications, transmit diversity techniques are used in order to mitigate the detrimental effects of fading. A simple transmit diversity technique is delay diversity, where the same signal is transmitted from multiple antennas with different delay. This results in an equivalent single-input channel with increased frequency-selectivity - and therefore increased frequency diversity - compared to the original sub-channels from each transmit to each receive antenna. In orthogonal frequency division multiplex (OFDM), this frequency diversity can be exploited by a forward error correcting decoder. However, introducing additional delay requires a longer guard interval and consequently results in reduced bandwidth efficiency. If the guard interval is not sufficiently long, the additional delay will cause inter-carrier interference. An elegant way to produce increased frequency selectivity without exceeding the guard interval was proposed in A. Dammann and S. Kaiser: Standard conformable antenna diversity techniques for OFDM systems and its application to the DVB-T system, IEEE Globecom, pages 3100-3105, November 2001, A.Dammann and S. Kaiser: Low complex standard conformable antenna diversity techniques for OFDM systems and its application to the DVB-T system, 4th International ITG Conference on Source and Channel Coding, pages 253-259, January 2002, A. Dammann, R. Raulefs, and S. Kaiser: Beamforming in combination with space-time diversity for broadband OFDM systems, IEEE International Conference on Communications (ICC), pages 165-171, April 2002, and in D. Gore, S. Sandhu, and A. Paulraj. Delay diversity codes for frequency selective channels, International Conference on Communications (ICC), pages 1949-1953. IEEE, April 2002, as cyclic delay diversity. Here, the delay is done in a cyclic manner such that the guard interval is not exceeded.

The choice of the cyclic delay is the essential design parameter. In order to allow exploitation of the full spatial diversity, the cyclic delay has to be chosen larger than the maximum channel delay. However, this criterion is not sufficient in terms of maximizing capacity. Furthermore, real world FEC codes have limited constraint length. Therefore, the full spatial diversity should be transformed into frequency diversity of a limited, controllable number of sub-carriers. This can be achieved by choosing large cyclic delays, which are a multiple of 2. Particularly, in a two transmit antenna system with a cyclic delay of $N_s/2$, where $N_s$ is the FFT size of the OFDM modulator, the spatial diversity is transformed into frequency diversity between only two neighbouring sub-carriers. This can be shown to yield optimum frame error rate (FER) e.g. with a standard convolutional code of rate $R \le 1/2$. Furthermore, this choice of the cyclic delays is advantageous for channel estimation or if differential modulation is applied. However, for code rates higher than R = 1/2 this choice of the cyclic delay turns out to be sub-optimum.

In the following, cyclic delay diversity will be described in a context of OFDM systems.

We consider a multiple-input-multiple-output (MIMO) channel with $n_T$ transmit antennas and $n_R$ receive antennas. The impulse response from transmit antenna n to receive antenna m at time t is given by the 1 x $N_s$ vector

$$h_t^{(nm)} \; = \; \left[ h_t^{(nm)}(0), \; h_t^{(nm)}(1), \; \ldots, \; h_t^{(nm)}(D), 0, \; \ldots, 0 \right] \qquad (1)$$

where $D$ is the maximum memory of a sub-channel from a transmit to a receive antenna.

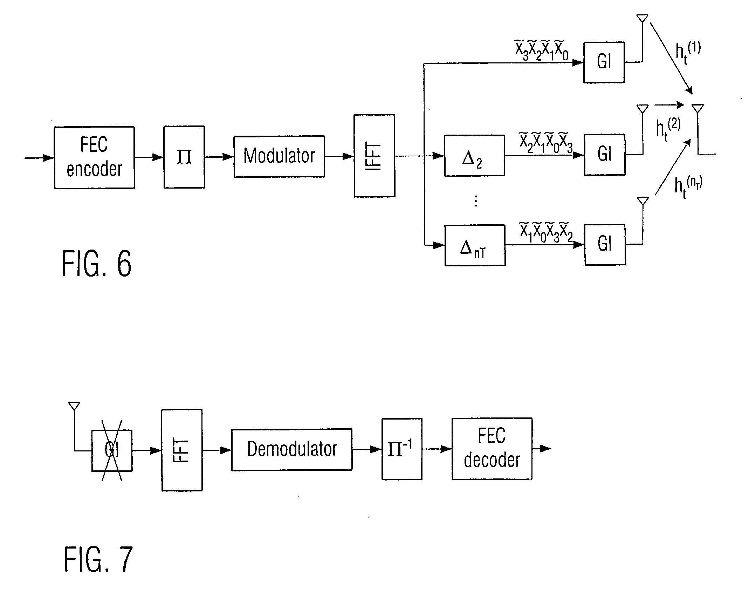

The principle of cyclic delay diversity is depicted in Figs. 6 and 7. The data is encoded by a forward error correcting (FEC) encoder. After an optional interleaver $\Pi$, the code bits are modulated e.g. on QAM or PSK symbols. OFDM is implemented using the inverse fast Fourier transform (IFFT) of size $N_s$, where $N_s$ is the number of sub-carriers. The output symbols of the IFFT are denoted $\tilde{x}_t$, t = 0, ..., $N_s$ - 1. Each antenna introduces a different cyclic delay $\Delta_n, n = 1, ..., n_T$, i.e. the transmit symbol from antenna $n$ at time $t$ is given by

$$x_t^{(n)} \; = \; \tilde{x}_{(t-\Delta_n) \bmod N_s}, \; t \; = \; 0, \; \ldots, \; N_s \; - \; 1, \; n \; = \; 1, \; \ldots, \; n_T \qquad (2)$$

Before transmission, a cyclic guard interval (GI) is included at each transmit antenna as it is usually done in OFDM.

The system is equivalent to transmission of the sequence $\tilde{x} = \llbracket \tilde{x}_0, ..., \tilde{x}_{N_s}-1 \rrbracket$ over a frequency-selective channel with one transmit antenna and impulse response

$$h_{equ,t}^{(1m)}(d) = \sum_{n=1}^{n_T} h_t^{(nm)}\big((d - \Delta_n) \bmod N_s\big) \qquad (4)$$

The receiver is a standard OFDM receiver, which removes the guard interval and performs the FFT before demodulation and decoding.

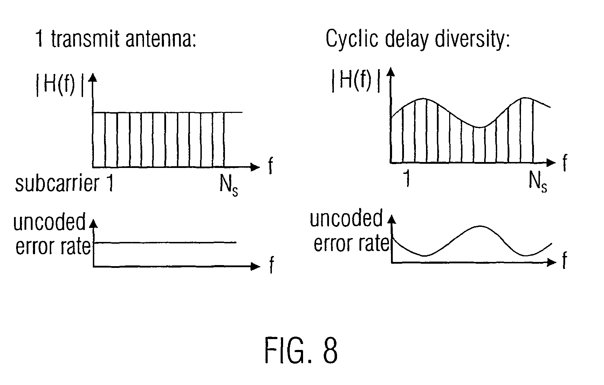

Basically, cyclic delay diversity has transformed the multiple-input multiple-output (MIMO) channel into a single-input multiple-output (SIMO) channel with increased frequency-selectivity, i.e. the spatial diversity is transformed to frequency diversity. The effect is illuminated in Fig. 8. In a flat fading channel as depicted on the left hand side of Fig. 8, the bit error rate (BER) will be the same on each sub-carrier. Cyclic delay diversity transforms the channel into a frequency-selective channel as depicted on the right hand side of Fig. 8. The average BER for encoded transmission will be the same as in the flat fading channel. However, the BER is not constant over the sub-carriers. An outer FEC decoder can pick up the available frequency diversity. Cyclic delay diversity requires an FEC decoder in order to exploit the diversity.

The resulting channel coefficient of the $d$-th sub-carrier at receive antenna $m$ in the $k$-th OFDM symbol is given by

$$H_k^{(m)}(d) = \sum_{n=1}^{n_T} H_k^{(nm)}(d)e^{j2\pi d \Delta_n/N_s}, \quad d = 0, \ldots, N_s - 1, \, m = 1, \ldots, n_R \qquad (5)$$

where

$$H_k^{(nm)} = \left[ H_k^{(nm)}(0), \ldots, H_k^{(nm)}(N_s) \right] \qquad (6)$$

is the FFT of the impulse response (1).

It has been shown in G. Bauch and J S. Malik. Orthogonal frequency division multiple access with cyclic delay diversity. In ITG Workshop on Smart Antennas, March 2004, that the full spatial diversity can only be exploited if the cyclic delays meet

$$\Delta_n > \Delta_{n-1} + D \qquad (7)$$

where $\Delta_n$ is normalized to the FFT sample spacing and $D$ is the maximum memory of a sub-channel from a transmit to a receive antenna. This condition is necessary but not sufficient for optimum performance. One possibility is to choose the cyclic delay according to

$$\Delta_n > \Delta_{n-1} + G + 1 \qquad (8)$$

where $G$ is the length of the guard interval. However, it has been shown in G. Bauch and J S. Malik: Orthogonal frequency division multiple access with cyclic delay diversity, ITG Workshop on Smart Antennas, March 2004, in G. Bauch: Multi-stream differential modulation for cyclic delay diversity in OFDM, IEEE International Conference on Communications (ICC), June 2004, G. Auer: Channel estimation for OFDM with cyclic delay diversity, IEEE International Symposium on Personal, Indoor and Mobile Radio Communications (PIMRC), September 2004, that it can be beneficial in terms of FER performance, channel estimation or application of differential modulation, to choose the maximum possible cyclic delays. This would lead to choosing the cyclic delays according to

$$\Delta_n = \frac{N_s(n-1)}{n_T} = \frac{N_s}{n_T} + \Delta_{n-1} \qquad (9)$$

However, it turns out that this choice is only optimum for FEC code rates $R \leq 1/2$. For higher code rates, lower cyclic delays are optimum.

This can be explained as follows: If the original channel was frequency flat and the cyclic delay is a multiple of 2, the frequency domain channel coefficients of the effective channel according to (5) can take a limited number of distinct states. E.g. in case of $n_T = 2$ transmit antennas and a cyclic delay of $\Delta_2 = N_s/2$, the term $e^{j2\pi d \Delta_n/N_s}$ can take 2 different states:

$$H_k^{(m)}(d) = H_k^{(1m)}(d) + H_k^{(2m)}(d), \ d \ \text{even} \qquad (10)$$

$$H_k^{(m)}(d) = H_k^{(1m)}(d) - H_k^{(2m)}(d), \ d \ \text{odd.} \qquad (11)$$

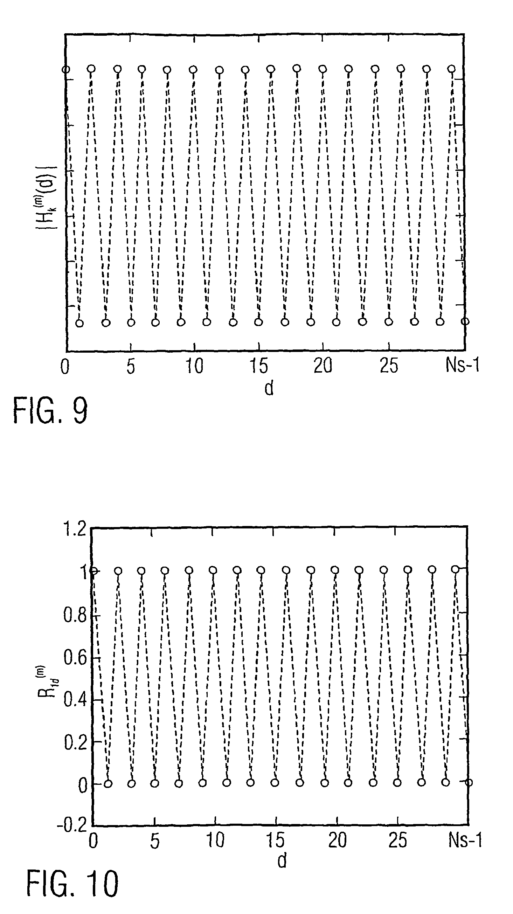

An example for a flat fading MIMO channel is depicted in Fig. 9. Given the correlation matrix

$$R^{(m)} = E\left\{H_k^{(m)H} H_k^{(m)}\right\} \qquad (12)$$

the correlation function $R_{1d}^{(m)}$ for the first sub-carrier is plotted in Fig. 10. It can be seen that the channel coefficient of every other sub-carrier is identical whereas neighbouring sub-carriers are uncorrelated. The spatial diversity is transformed into frequency diversity between neighbouring sub-carriers.

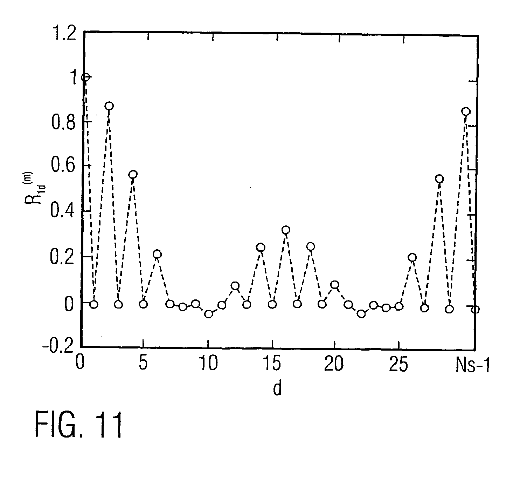

We obtain similar results for a frequency-selective channel. The correlation function is depicted in Fig. 11 for a channel with $D + 1 = 3$ independently fading taps $h_t^{(nm)}(d)$ with equal mean power from each transmit to each receive antenna. Due to the frequency-selectivity of the original channel, the channel taps $H_k^{(m)}(d)$ of every other sub-carrier are not identical anymore.

Documents WO-A-2004/025874, US-A-20040087294 and US-A-6 377 632 show cyclic delay diversity systems.

It is the object of the present invention to provide a cyclic delay diversity concept with an increased performance.

This object is achieved by the apparatuses and methods according to the appended claims.

The present invention is based on the finding that a performance of a frequency diversity scheme being obtained by either a cyclic delay diversity scheme or by a phase diversity scheme can be improved when the frequency diversity scheme is variably adapted to varying transmission conditions.

For example, a cyclic delay diversity scheme can be improved by an adaptive cyclic delay control in order to adapt the cyclic delay diversity scheme to varying transmission conditions, like for example different coding schemes used for encoding information sequences in order to match a frequency diversity resulting when introducing the cyclic delay diversity to the coding scheme so that, at a receiver, a diversity decoding gain can be obtained.

Moreover, introducing cyclic delay diversity has an impact on a channel capacity of an effective channel resulting when transmitting a plurality of transmit sequences through the plurality of channels using cyclic delay diversity technique. If the above-mentioned transmission condition comprises e.g. a capacity increase requirement, then, in accordance with the present invention, a capacity of the effective channel can be increased by controlling the cyclic delays, or, equivalently, cyclic shifts, wherein the cyclic delays can be found on a basis on an analysis by synthesis approach in order to find a set of cyclic delays in order to control the cyclic delay diversity such that the capacity of the effective channel is increased.

The same considerations apply for introducing cyclic delay diversity at a receiver, using a plurality of receive antennas for receiving different versions of a transmit sequence. In accordance with the present invention, controllable cyclic delay diversity can be introduced in a receiver by controllably cyclically delaying the received versions to fulfil e.g. one of the transition requirements mentioned above due to linearity of the cyclic delay diversity scheme.

Furthermore, the same consideration apply for introducing variable frequency diversity by the means of introducing variable phase shifts in frequency domain due to a close relationship between a delay in time domain and a phase shift in frequency domain.

Further embodiments of the present invention are described with respect to the following figures, in which:

Fig. 1 shows an apparatus for generating a plurality of output sequences according to an embodiment of the present invention;

Fig. 2a-c demonstrates a performance of the inventive cy- clic delay diversity approach;

Fig. 3a-b demonstrates a performance of the inventive cy- clic delay diversity approach;

Fig. 4 shows a transmit apparatus according to an em- bodiment of the present invention;

Fig. 5 shows preferable parameters used for determining the inventive cyclic delays;

Fig. 6 shows a block diagram of a transmitter using cy- clic delay diversity in coded OFDM;

Fig. 7 shows a block diagram of a receiver using cyclic delay diversity in coded OFDM;

Fig. 8 demonstrates the transformation of channel by cy- clic delay diversity;

Fig. 9 shows an embodiment of a channel frequency re- sponse resulting when cyclic delay diversity is used;

Fig. 10 shows a correlation function for an embodiment of a cyclic delay diversity; and

Fig. 11 shows a correlation function for a further em- bodiment of cyclic delay diversity.

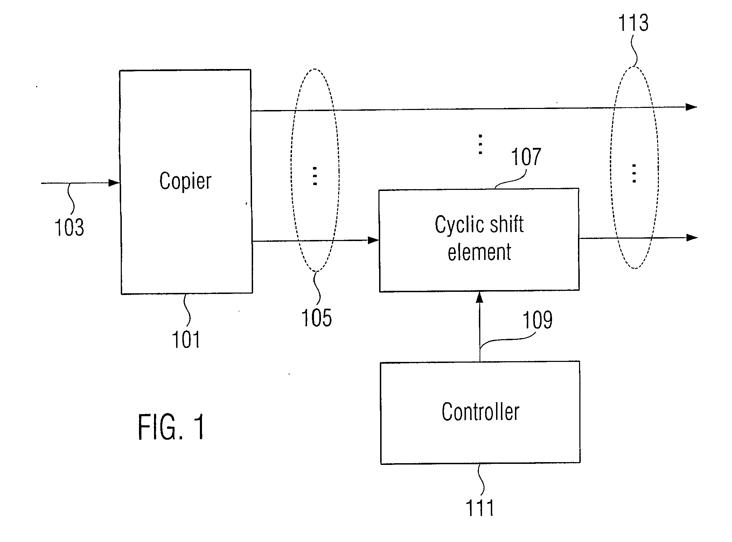

Fig. 1 shows a block diagram of an apparatus for generating a plurality of output sequences from an input sequence for obtaining cyclic delay diversity according to an embodiment of the present invention.

The apparatus shown in Fig. 1 comprises a copier 101 having an input 103 and a plurality of outputs 105. The apparatus further comprises a cyclic shift element 107, the cyclic shift element having an input coupled to an output of the plurality of outputs of the copier 101. Furthermore, the cyclic shift element has an output at a control input 109, to which an output of a controller 111 is coupled. Via the output of the cyclic shift element 107 an output sequence of a plurality of output sequences 113 is provided.

In accordance with the present invention, the copier 101 is configured for providing a plurality of copies of an input sequence, the input sequence being provided via the input 103, the plurality of copies of the input sequence being provided via the plurality of outputs 105 of the copier 101, wherein a copy of the input sequence is provided via an output associated therewith.

By the way of example only, Fig. 1 depicts the case where the first copy of the input sequence is directly provided as a first output sequence of the plurality of output sequences without being cyclically shifted. However, in accordance with the present invention, also the first copy of the input sequence can cyclically be shifted using e.g. an inventive variable cyclic shift element for introducing cyclic delay diversity.

The cyclic shift element 107 is configured for variably cyclically shifting a copy of the input sequence provided to the cyclic shift element 107 to obtain an output sequence of the plurality of output sequences, wherein the output sequence is provided via the output of the cyclic shift element 107.

In accordance with the present invention, the cyclic shift element 107 is configured for receiving a variable control signal indicating a number of values the copy of the input sequence is to be shifted by and, in response to the variable control signal, for cyclically shifting the copy of the input sequence by the number of values so that controllable cyclic delay diversity can be introduced.

The control signal may be provided by the controller 111 to the control input 109 of the cyclic shift element 107.

For example, the plurality of output sequences 113 is to be transmitted by the plurality of transmit points, each transmit point comprising a transmit antenna, through the plurality of channels to a receiver. In this case, the controller 111 may be configured for providing the variable control signal to the cyclic shift element 107 in order to control the cyclic delay diversity and therefore in order to control the resulting frequency diversity, depending on the cyclic delay diversity scheme.

In accordance with an aspect of the present invention, the controller 111 may be configured for generating the variable control signal in order to adapt the cyclic delay diversity to a variable transmission condition.

In accordance with the present invention, the transmission condition reflects the fact that cyclic delay diversity introducing frequency diversity can contribute to decreasing a bit error rate when, at a receiver, decoding a received sequence by exploiting frequency diversity introduced by the cyclic delay diversity.

For example, the controller 111 may be configured for determining a first number of values the copy of the input sequence is to be shifted by, a second number of values the copy of the input sequence is to be shifted by, to determine which number of values corresponds to an increased diversity coding gain when using a decoding scheme at a receiver, and to provide the number of values to the cyclic shift element 107, which is associated with the greater diversity coding gain.

In accordance with the present invention, the transmission condition may further comprise a code rate or a coding scheme so that the cyclic delay diversity can be adapted to the coding scheme or to the code rate in order to introduce frequency diversity supporting decoding at a receiver with a smaller bit error rate.

Moreover, the transmission condition may comprise a capacity of a channel, for example, the effective channel mentioned above, so that the controller 111 may be configured to determine the number of values for e.g. a certain state of the plurality of communication channels so that the capacity of the effective channel observed at a receiver. For example, the controller 111 may be configured for determining a plurality of number of values, for determining the resulting channel capacity for each number of values, for comparing the resulting channel capacities and for providing the number of values associated with the greatest channel capacity to the cyclic shift element 107.

Moreover, the transmission condition may include a code rate or an available bandwidth or a number of user signals comprised by the input sequence in a multi-user scenario, or a number of transmit or receive points associated with the number of transmit antennas or receive antennas, or a modulation or demodulation scheme, or a quality of service requirement, or a length of the input sequence, the input sequence comprising e.g. a plurality of code words resulting when encoding an information sequence, each code word having a certain code word length, the code word length being associated with a code rate resulting when a coding scheme is used.

For example, the variable transmission condition may comprise the code rate mentioned above. In this case, the controller 111 may be configured for determining the number of values the copy of the input sequence is to be shifted by in dependence on the code rate in order to adapt the cyclic delay diversity to adapt the resulting frequency diversity to the code rate. For example, the controller 111 is configured for controlling the cyclic delay diversity resulting when cyclically shifting copies of the input sequence such that the channel transfer function of the effective channel resulting when the cyclic delay diversity is introduced is matched to the frequency diversity.

In accordance with the present invention, the cyclic delays are chosen, e.g. in dependence on a code rate $R$, such that the equivalent frequency domain channel will have S different states given that the original channel was frequency flat.

For example, the cyclic shift element 107 is controlled in such a way that a number of different channel states is introduced into the resulting effective channel transfer function, wherein the number of different channel states S is chosen such that the following requirement is fulfilled

$$R \leq \frac{S-1}{S},$$

wherein R denotes a code rate. Preferably, S is a smallest number fulfilling the above requirement, e.g. upperbounding R.

For example, the controller 111 may be configured for determining a number of values the copy of the input frequency is to be shifted by from a look-up table comprising different numbers of values for different code rates. For example, the different numbers of values are a priori predetermined and stored into the look-up table for quick access.

As has been mentioned above, the controller 111 be configured for determining the number of values the copy of the input sequence is to be shifted by such that a number of different channel states is introduced to an effective channel, the effective channel resulting when transmitting the plurality of output sequences to the plurality of communication channels, wherein the number of different channel states may depend on the code rate as has been described above. For the case the transmission condition comprises the code rate associated with a coding scheme. For example, the controller 111 is configured for determining the number of values the copy of the output sequence is to be shifted by such that a number of different sets of correlated coefficients of a channel transfer function of the effective channel results, wherein coefficients belonging to different sets are at least partly uncorrelated, and wherein the number of different sets of correlated coefficients corresponds to the number of channel states. For example, the number of values the output sequence is to be shifted by is chosen such that every second carrier is correlated and such that every other second sub-carrier is correlated which results in two sets of correlated sub-carriers, the correlated sub-carriers corresponding to correlated coefficients of the transfer function of the effective channel.

In accordance with a further aspect of the present invention, the input sequence may comprise a multi-carrier sequence in frequency-time transform using a $N_s$-point frequency-time transform, for example, Fourier transform. For example the multi-carrier sequence is obtained from an information sequence being coded using a coding scheme, for example, using a block coding scheme. In this case, the controller 111 may be configured for generating the variable control signal indicating a number of values an n-th copy of the input sequence is to be shifted by, wherein the number of values is derivable from the following equation:

$$\Delta_n = \frac{N_s}{S} + \Delta_{n-1} \qquad (15)$$

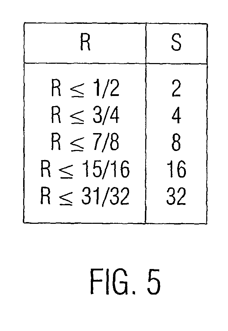

wherein $\Delta_{n-1}$ denotes a number of values a (n-1)-th copy of the input sequences to be shifted by and wherein S denotes a number of different channel states depending e.g. on the code rate. Preferable values for the variable S are shown e.g. in Fig. 5 for different code rates.

In accordance with a further aspect of the present invention, the variable transmission condition may comprise a capacity of an effective channel, the effective channel resulting when transmitting the plurality of output sequences through the plurality of channels, as has been described above.

As it will be shown later, a capacity of the effective channel depends on a cyclic delay diversity scheme. In other words, the capacity of the effective channel depends on a number of values a copy of the input sequence is to be shifted by. Preferably, the controller 111 is configured for determining the number of values such that the capacity of the effective channel is increased. For example, the controller 111 may be configured for determining the number of values using an inventive formula for determining a channel capacity, which formula will be described later.

For example, the controller 111 is configured for determining a number of values only of a set of values comprising values having a greatest common divisor being equal to 1. In order to find a number of values a copy of the input sequences to be shifted by, the number of values being associated e.g. with a greatest channel capacity when compared to channel capacities obtainable when using the other number of values in the set of values. In other words, the controller 111 is configured for determining the number of values only from the set of values in the set of values. For example, a smallest number of values in the set of values is greater than 1, for example, 3 or 15, if large cyclic delays are required for increasing channel capacity.

The values in a set of values need not necessarily be absolutely prime since it has been found that values being relative prime with respect to each other also contribute to an increased channel capacity.

However, the set of values may comprise absolute prime values, like e.g. 3, 5, 7, 11 etc.

In accordance with a further aspect of the present invention, the transmission condition may comprise a channel state information. In this case, the controller 111 may be configured for determining the number of values on a basis of the channel state information in order to control the cyclically shifting the copy of the input sequence in dependence on the channel state information. In this context, the channel state information may indicate a channel state of each state of the plurality of channels so that channel state information for the effective channel resulting when introducing cyclic delay may be determined. If, for example, the channel state information indicates that the effective channel resulting when introducing cyclic delay diversity actually comprises frequency diversity, then the number of values the copy of the input sequences to be shifted by may be chosen such that only a certain amount of frequency diversity is additionally introduced into the resulting effective channel.

For example, the controller 111 is configured to derive an information on the frequency diversity of the effective communication channel from the channel state information, to verify whether an increased frequency diversity would be advantageous for a given coding scheme and to control the cyclic shift element 107 in order to increase the frequency diversity when necessary.

In the following, the inventive concept will be described in more detail.

Referring again to the embodiments of Figs. 9 and 10, neighbouring sub-carriers are still uncorrelated. Therefore, spatial diversity of the original channel is obtained from neighbouring sub-carriers whereas frequency diversity of the original channel can be obtained by coding through even and odd numbered sub-carriers.

If we choose a cyclic delay of e.g. $\Delta_2 = \frac{N_s}{4}$, the term $e^{j2\pi d \Delta_n / N_s}$ in (5) can take four different values, i.e. in a flat channel we observe four different channel states of the resulting frequency domain channel $H_k^{(m)}$. The spatial

diversity is transformed into frequency diversity over four neighbouring sub-carriers. For $\Delta_2 = \frac{N_s}{8}$, we obtain 8 different states etc.

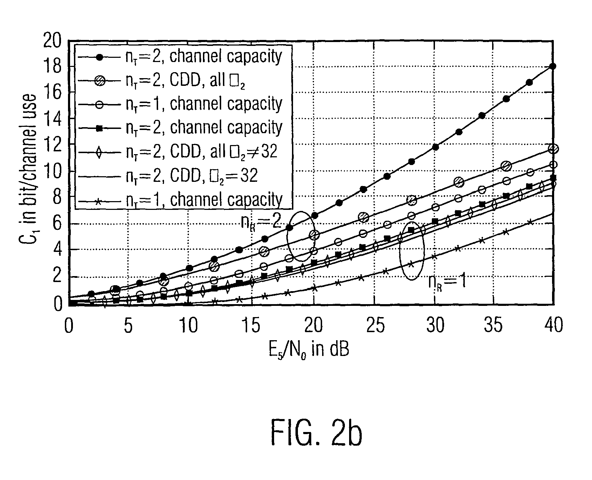

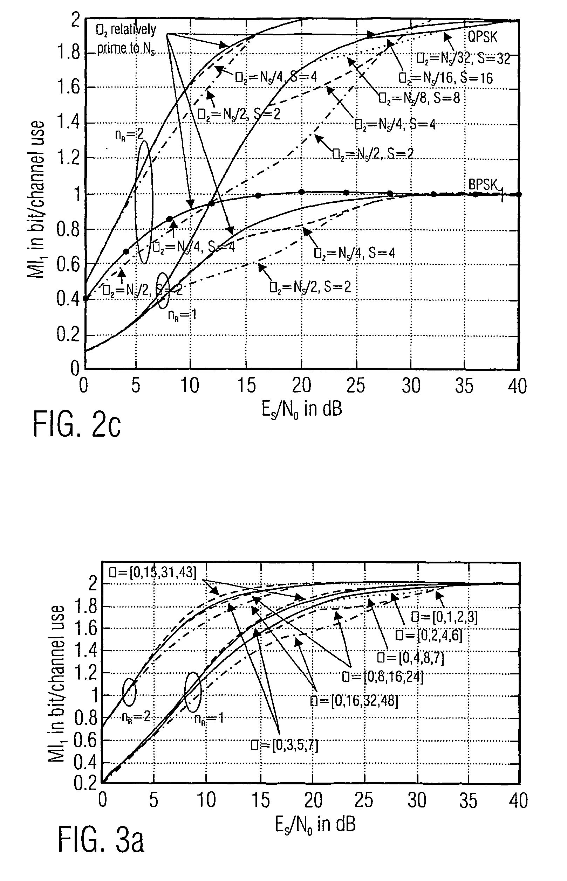

In the sequel, we denote the number of different channel states, which would result in a frequency flat channel by $S$. Fig. 2c shows the capacity for different values of the cyclic delay, which result in different values of $S$ for $n_T = 2$ transmit antennas. Note that the same values of $S$ can also be obtained by other cyclic delays. The exact values of those cyclic delays depend on the number $N_s$ of sub-carriers. It turns out, that the optimality of the cyclic delay depends on the code rate. It can be seen that for higher code rates a higher value of $S$ is required for optimum performance. Interestingly, for very high code rates, $S = 2$ becomes optimum again.

An intuitive explanation is as follows: Consider a systematic code of rate $R$ and a cyclic delay, which leads to $S = 2$, e.g. $\Delta = N_s/2$. Since there are only 2 different channel states, it can happen that every other sub-carrier is in a very bad state and the symbols transmitted on those sub-carriers are essentially punctured. Now, if the code rate is higher than 1/2, i.e. $R \geq 1/2$, e.g. all parity bits plus some systematic bits would be punctured and the code cannot be detected error free. Similarly, in case of $S = 4$, a systematic code of rate $R > 3/4$ is not suitable.

We observe similar but not that clear behaviour for more transmit antennas. The capacity results for $n_T = 4$ transmit antennas are depicted in Fig. 3a. Here, cyclic delays according to $\Delta_n = \Delta_{n-1} + N_s/4$, i.e. $\Delta = [0,16,32,48]$ are already sub-optimum for code rates $R < 3/4$. However, we still see the characteristic blip at $R = 3/4$, i.e. a mutual information of 1.5 bit/channel use. A good solution with close to optimum performance seems to be to choose the cyclic delays relatively prime, e.g. $\Delta = [0,3,5,7]$. The best performance for $N_s = 64$ was found to be $\Delta = [0,15,31,43]$, which indicates that we should choose large delays which are relatively prime. Even though cyclic delays $[\Delta_1, \Delta_2, \Delta_3, \Delta_4] = [0, N_s/4, N_s/2, 3N_s/2]$, which result in $S = 4$ different channel states are not optimum in terms of capacity, we have shown that they allow to obtain optimum FER for code rates $R \leq 3/4$ for codes with limited constraint length as is disclosed in G. Bauch and J.S. Malik: Parameter optimization, interleaving and multiple access in OFDM with cyclic delay diversity, IEEE Vehicular Technology Conference (VTC), May 2004, G. Bauch and J S. Malik: Orthogonal frequency division multiple access with cyclic delay diversity, ITG Workshop on Smart Antennas, March 2004, and in J.S. Malik: Cyclic delay diversity in OFDM, master thesis, Department of Communications Engineering, TU Munich, October 2003.

Furthermore, those delays are suitable for cyclic delay diversity with differential modulation as shown in G. Bauch: Multi-stream differential modulation for cyclic delay diversity in OFDM, IEEE International Conference on Communications (ICC), June 2004.

Note that even though we gave examples only for BPSK and QPSK modulation, we have verified that the aforementioned effects are independent of the particular modulation method.

In the following, the considered channel model will be described

The channel coefficients are assumed to be independent complex Gaussian random variables. The channel is assumed to be constant during transmission of an OFDM symbol such that - in case of a sufficiently long guard interval, no inter-carrier interference occurs. Investigated types of power delay spectra are summarized in Fig. 2c, where $T_S$ denotes the time domain sample spacing. Additive white Gaussian noise would be added at each receive antenna. The total transmit energy per time slot is denoted $S_S$, i.e. the energy per sub-symbol transmitted from each antenna.

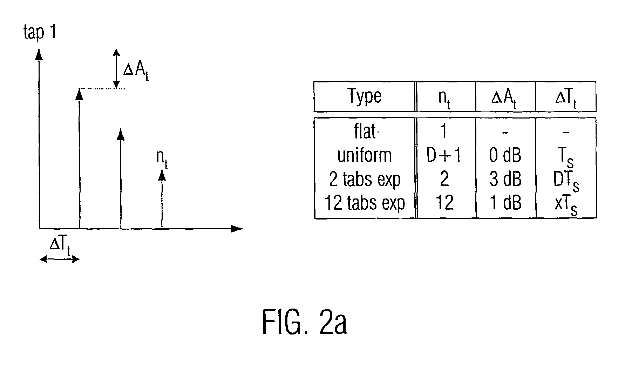

Fig. 2a shows the one per set capacity for two transmit antennas in a frequency flat channel with Gaussian transmit symbols. For one receive antenna, or cyclic delays yield the same capacity except for a cyclic delay of 32, which shows a slight degradation. For two receive antennas, this effect vanishes. For comparison, we also included the capacity of the channel itself both one and two transmit antennas. In case of one transmit antenna, cyclic delay diversity almost achieves the channel capacity for two transmit antennas and shows a significant diversity advantage over a single transmit antenna system. For two receive antennas there is still a clear diversity gain over a single transmit antenna system. However, since transfer diversity schemes cannot reach the channel capacity in case of multiple receive antennas, there is a degradation compared to the channel capacity for two transmit antennas, which results from the different asymptotic slopes of the capacity curves.

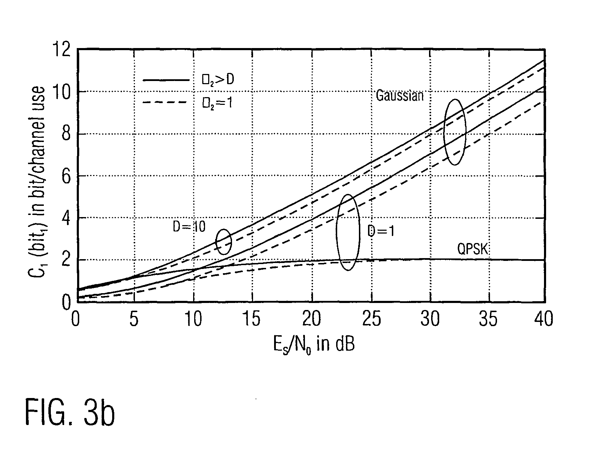

Fig. 3b demonstrates the performance for frequency selective channels for two transmit antennas, where all cyclic delays, which meet $\Delta_2$ greater than $D$ shows similar performance. Fig. 3b also demonstrates that cyclic delays need to be chosen larger than the maximum channel delay. Otherwise, the effective time-domain channel will include non-resolvable taps , which consist of sums of taps from different transmit antennas resulting in reduced diversity level.

The present invention further provides a transmit apparatus comprising a processor for processing an information sequence using a processing scheme to obtain an input sequence and the apparatus for generating a plurality of output sequences from the input sequence to obtain cyclic diversity, as has been described above.

Preferably, the apparatus for generating the plurality of output sequences to be transmitted by a plurality of transmit points, each transmit point including a transmit antenna, comprises a controller for controlling the cyclic shift element in order to adapt a number of values a copy of the cyclic shift element is to be shifted by to the processing scheme. In this context, the processing scheme may comprise any of the transmission conditions mentioned above.

For example, the processor comprises a coder for encoding the information sequence using a coding scheme, wherein the controller comprises by the apparatus for generating the plurality of output sequences (e.g. the controller 107) is configured for controlling the number of values a copy of the input sequence is to be shifted by for adapting the cyclic delay diversity to the coding scheme as has been described above. For example, the coding scheme is associated with a code rate. In this case, the controller may be configured for controlling the number of values a copy of the input sequence is to be shifted in dependence on the code rate. Furthermore, in accordance with a further aspect of the present invention, the controller may configured for controlling the coder in order to e.g. determine a coding scheme to be used for encoding the information sequence in dependence on a transmission condition, for example, one of the transmission conditions mentioned above, e.g. channel state information quality of service etc. After the decoding scheme has been determined, the controller may be configured for determining the number of values in dependence on the coding scheme in order to e.g. take the code rate into account when introducing additional frequency diversity by the means of cyclically delaying the copies of the input sequence, as has been described above.

In order to determine the coding scheme to be used by the coder for encoding the information sequence, the controller may refer to any known approaches providing an appropriate coding scheme for a given channel state.

In accordance with the present invention, the controller may be configured for determining a code rate R in dependence on a number S of different channel states being introduced by the cyclic delay diversity scheme. For example, the controller may be configured for determining R such that the following requirement is fulfilled:

$$R \leq \frac{S-1}{S}$$

In accordance with a further aspect of the present invention, the processor may comprise an encoder for encoding the information sequence using a coding scheme in order to obtain an encoded sequence, a de-multiplexer for de-multiplexing the encoded sequence into a number of streams of values in response to a control signal indicating the number of stream of values, for each stream of values, a mapper for mapping groups of streams of values onto symbols according to a mapping scheme, e.g. QAM (QAM = Quadrature Amplitude Modulation), in order to obtain the number of streams of symbols. Furthermore, the transmit apparatus may comprise an assigner for assigning a number of successive symbols of each stream of symbols to a different set of successive sub-carriers in order to obtain a multi-carrier signal in frequency domain.

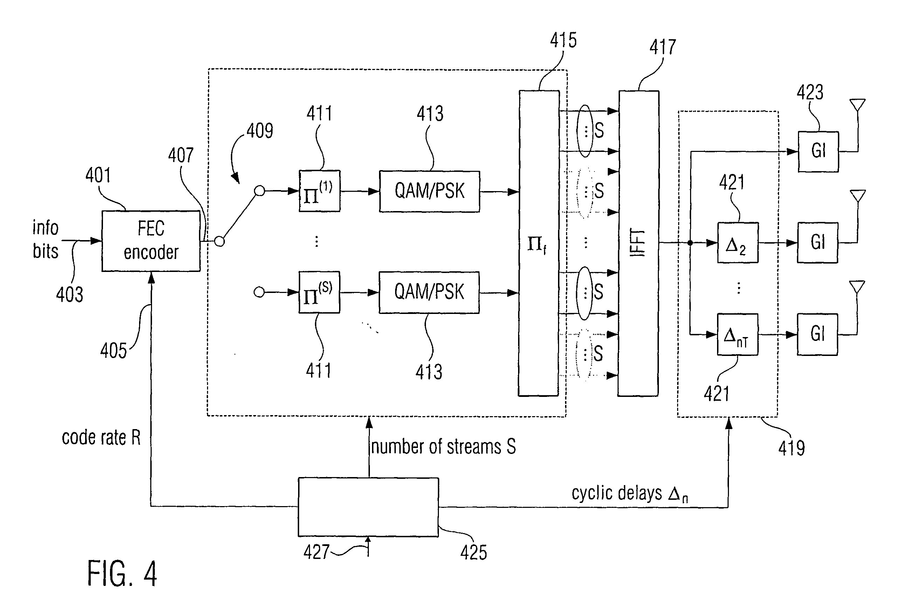

In order to obtain the input sequence to be transmitted, the transmitter may comprise a frequency time transformer, e.g. an inverse Fourier transformer, for transforming the multi-carrier signal to obtain the input sequence, serving as a basis for providing the plurality of output sequences by the inventive apparatus for generating the plurality of output sequences. For example, the controller comprised by the apparatus for generating the plurality of transmit sequences (output sequences) may be configured for providing the control signal to the de-multiplexer indicating the number of streams of values to be provided, wherein the number of streams of values depends on the coding scheme. For example, the number of stream of values is closely related to a code rate resulting when using a certain code scheme and corresponds to e.g. a code word length. An embodiment of a transmitter apparatus incorporating the above-mentioned inventive concept is shown in Fig. 4.

The transmitter apparatus of Fig. 4 comprises an encoder 401, for example a FEC encoder (FEC = Forward Error Correction), the encoder 401 having an input 403, a control input 405, and an output 407, the output 407 being coupled to a switch 409, the switch 409 representing the above-mentioned de-multiplexer by way of example only.

The switch 409 has a number of outputs, the number of outputs corresponding to the number of streams *S* mentioned above, wherein each output is associated with a signal processing path of *S* signal processing path. Each signalprocessing path comprises an interleaver 411 coupled between the respective output of the switch 409 and a mapper 413. Each mapper 413 has an output, wherein the S output of the mapper 413 is coupled to an assigner 415. The assigner 415 has a plurality of outputs coupled to a plurality of inputs of an IFFT transformer 417 (IFFT = Inverse Fast Fourier Transform). The IFFT transformer has an output coupled to an input of the inventive apparatus 419 for generating the plurality of output sequences (transmit sequences).

The inventive apparatus 419 comprises a copier for providing a plurality of copies of the input sequence provided by the IFFT transformer 419, wherein, the copier is represented by a node. Except for a first copy of the input sequence, all other copies of the input sequence are shifted using a controllable cyclic shift element 421 being comprised by the inventive apparatus 419.

Each output sequence is provided to a guard insertion interval 423 (GI) in order to insert a guard interval, for example, a cyclic prefix according to an OFDM transmission scheme. Each guard interval element 423 is associated with an antenna, as is depicted in Fig. 4 for the sake of completeness.

The apparatus shown in Fig. 4 further comprises a rate adaptation unit 425, the rate adaptation unit 425 comprising the functionality of the inventive controller being described above.

In particular, as is depicted in Fig. 4, the rate adaptation unit 425 may be configured for controlling the encoder 405 in order to determine a coding scheme to be used by the encoder 405, the coding scheme being associated with a code rate $R$, and/or for controlling the switch 409 in order to determine the number of streams $S$, and/or for controlling the cyclic delays, i.e. the number of values the copies of the input sequence are to be shifted by.

The encoder 402 may be configured for generating a control signal for controlling the encoder 401 and/or for controlling the switch 409 and/or for controlling the cyclic delay elements 421 in dependence on a transmission condition comprising e.g. a general state information (CSI), quality of service (QOS) or other transmission conditions, wherein the transmission condition may be provided to the rate adaptation unit 425 via a control input 427 from a further control entity comprised by the inventive transmitter, the further entity being configured e.g. for controlling the whole transmission process.

As is shown in Fig. 5 the information bits are encoded by the encoder of a forward error control (FEC) code. The code bits are de-multiplexed into $S$ streams. Within each stream optional interleaving is performed by a set of bit-interleavers $\Pi^{(s)}$. Then, the interleaved code bits are mapped on transmit symbols according to the mapping rule of a digital modulation scheme, e.g. QAM, PSK, or a differential modulation scheme. The transmit symbols are mapped on sub-carriers of a multi-carrier modulation scheme such as OFDM by the sub-carrier assignment unit $\Pi_f$. The OFDM modulation is performed by the inverse fast Fourier transform (IFFT). The resulting time domain samples are transmitted simultaneously form $n_T$ antennas, where each antenna $n$ introduces a cyclic delay $\Delta_n$, as explained above.

The code rate $R$ is determined from a rate adaptation unit based on criteria such as current channel state or required quality of service. The rate adaptation unit also determines the cyclic delays $\Delta_n$ and the number $S$ of interleaver streams. For the choice of the cyclic delay and $S$, there are three modes:

Mode 1: Cyclic Delays Independent of Code Rate

The cyclic delays are chosen independent of the code rate. The cyclic delays are chosen according to

$$\Delta_n = \Delta_{n-1} + G \qquad (13)$$

where $G$ is the length of the guard interval GI. The number of streams is preferably $S = 1$.

Mode 2: Relatively Prime Cyclic Delays Independent of Code Rate

The cyclic delays are chosen independent of the code rate. The cyclic delays are chosen such that

$$\Delta_n = \Delta_{n-1} + G \qquad (14)$$

where $G$ is the length of the guard interval GI, and all $\Delta_n$ are relatively prime to each other and to the FFT size $N_s$. Large delays should be preferred. A more relaxed condition is that not all $\Delta_n$ are relatively prime but at least some of them. The number of streams is preferably $S = 1$.

Mode 3: Rate Dependent Choice of the Cyclic Delays

The cyclic delays are chosen depending on the code rate $R$. Particularly, cyclic delays are chosen such that the equivalent frequency domain channel will have $S$ different states given that the original channel was frequency flat. The value of $S$ is obtained from Fig. 5.

There are several possibilities for the cyclic delays in order to obtain a certain number $S$ of different channel states. For even numbers $n_T$ of transmit antennas, we recommend choosing the cyclic delays according to

$$\Delta_n = \frac{N_s}{S} + \Delta_{n-1} \qquad (15)$$

However, the condition

$$\Delta_n > \Delta_{n-1} + D \qquad (16)$$

where $D$ is the channel memory as defined above should be met.

The rate adaptation unit chooses the code rate depending on a criterion such as channel state or QoS. Depending on the code rate it chooses the smallest value of $S$ from Fig. 5, which is possible for the given number $n_T$ of transmit antennas. The cyclic delays are determined such that $S$ different channel states would result in a flat fading channel.

Optionally, the interleaving scheme is also modified such that the code bits are de-multiplexed into $S$ streams. Each stream performs optional interleaving according to the permutation rules $\Pi^{(s)}$. Then, the permuted bits are mapped on complex constellation elements of a digital modulation method such as QAM or PSK. Differential modulation is also possible in each stream.

The transmit symbols are mapped on sub-carriers by the sub-carrier assignment unit $\Pi_f$. This is done such that the symbols of a particular stream $s$ are assigned to sub-carriers, which would face the same channel state in a flat fading channel. This is accomplished as indicated in Fig. 9, where the symbols of the $S$ streams are assigned to $S$ neighbouring sub-carriers. Additional frequency interleaving of groups of size $S$ is possible.

The receiver is informed about the current code rate and the number of streams. Essentially, it is sufficient if the receiver is informed about the code rate $R$. From the code rate it can determine the cyclic delays from a look-up table, which is stored in the receiver. The receiver performs the reverse operation of the transmitter: After the FFT, a demapping unit demaps the received symbols to bits. Preferably, soft values, e.g. log-likelihood ratios are computed. These output values of the demapper are deinter-leaved in each of the $S$ streams. The $S$ streams are multiplexed and fed to the FEC decoder.

As has been mentioned above, cyclic delay diversity can also be introduced at the receiver in order to increase a frequency selectivity of a resulting effective channel.

Therefore, all embodiments described above can also be used in a receiver for introducing receiver-sided cyclic delay diversity.

The present invention further provides an apparatus for generating an output sequence from a plurality of input sequences, for example from $n_T$ input sequences, for obtaining cyclic delay diversity. The plurality of input sequences may be associated with the plurality of receiving points, each receiving point comprising a receive antenna, the receiving points being configured for providing different receive versions of a transmit sequence being transmitted through a communication channel.

The inventive apparatus comprises $n_T$-1 cyclic shift elements for variably cyclically shifting $T$ input sequences to obtain $n_T$-1 shifted sequences, wherein each cyclic shift element is configured for receiving a variable control signal indicating a number of values an input sequence is to be shifted by, and, in response to the variable control signal, for cyclically shifting the input sequence by the number of values. Furthermore, the apparatus comprises an adder for adding the $n_T$-1 shifted sequences and a first input sequence or a shifted version thereof to obtain the output sequence.

The apparatus for generating the output sequence may comprise a controller having the functionalities described above for controlling the shift elements in order to adjust the cyclic delay diversity depending e.g. on a transmission condition, as has been described above.

Furthermore, the apparatus for generating the output sequence may be used in a receiver, for example, in a multi-carrier receiver having been configured e.g. for receiving signals being provided by the inventive transmit apparatus described above. In other words, the receiver comprises a functionality, which is inverse to that of the transmit apparatus described above.

The present invention further provides a receiver apparatus for providing a received version of an information sequence from a receive sequence, the receive sequence comprising a superposition of a plurality of transmit sequences being transmitted through the plurality of communication channels, a transmit sequence resulting from cyclically shifting a copy of an input sequence by a number of values, the input sequence resulting from frequency-time transforming a multi-carrier signal, the multi-carrier signal comprising different sets of successive sub-carriers, each set of successive sub-carriers resulting from assigning a number of successive symbols of a stream of symbols of a number of streams of symbols to successive sub-carriers, a stream of symbols resulting from mapping groups of streams of values onto symbols according to a mapping scheme, e.g. QAM, the number of streams or values resulting from de-multiplexing an encoded sequence into the number of streams of values, the encoded sequence comprising an information sequence being coded using a coding scheme. In other words, the receive sequence is a received version of a transmit sequence being generated by the inventive transmit apparatus described above.

In order to receive and process the receive sequence, the receive apparatus comprises means for providing information on the coding scheme in order to reprocess the received sequence using an inverse processing scheme to that used at the transmitter.

Moreover, the receive apparatus comprises a time-frequency transformer, for example a Fourier transformer, for transforming the receive sequence into a transformed sequence.

Furthermore, the receive apparatus comprises a reassigner being coupled to a plurality of outputs of the time-frequency transformer, the reassigner being configured for performing an operation which is inverse to the operation of the assigner 415 shown in Fig. 4.

The reassigner has S outputs, each output being coupled to a demapper, each demapper being coupled to a deinterleaver. The demapper and the interleaver are configured for performing inverse operations to those performed by the mapper 413 and interleaver 411 shown in Fig. 4, by way of example only. It is to be noted that the interleaver 411 and the deinterleaver are optional.

The $S$ outputs of the $S$ demapper are coupled to a multiplexer being configured for multiplexing the data to a sequence to be decoded by a decoder in order to obtain the received version of the information sequence.

Moreover, the means for providing information on the coding scheme may be configured for deriving the number of streams $S$ from the coding scheme and for controlling the reassigner 415 in order to obtain the $S$ streams to be demapped.

Additionally, the receive apparatus may comprise a channel estimator being configured for estimating the plurality of channels from an estimate of the effective channel. In order to obtain the estimates of the plurality of the channels comprised by the effective channel, the channel estimator may require information on currently being used cyclic delays. This information can be provided by the means for providing the information on the coding scheme. More specifically, the means for providing information on the coding scheme may be configured for deriving the number $S$ from the code rate and to derive the used cyclic delays using the number S, by way of example only.

The capacity of cyclic delay diversity can be computed from the frequency domain representation (5) of the equivalent frequency-selective single-input multiple-output (SIMO) channel. We collect the channel coefficients of the SIMO channel for sub-carrier $d$ in the $n_r \times 1$ matrix

$$\tilde{H}_k(d) = \left[ H_k^{(1)}(d), \ldots, H_k^{(n_R)}(d) \right]^T$$

and assume a sufficiently long guard interval of length $G \geq D$. Then, the capacity of cyclic delay diversity with no channel state information (CSI) at the transmitter but perfect CSI at the receiver for the channel realization $H_k$ is given by

$$C(H_k) = \frac{1}{N_s + G} \sum_{d=0}^{N_s - 1} \log_2 \left\{ \det \left( I_{n_R} + \frac{E_s}{N_0 n_T} \tilde{H}_k(d)^H \right) \right\}.$$

Depending on the time variance of the channel, different capacity concepts are meaningful: In an ergodic channel, the capacity is given by

$$C = \mathcal{E}_{H_k} \{ C(H_k) \}$$

where $\varepsilon_{H_k}$ denotes expectation with respect to $H_k$ This ergodic capacity implies that each codeword faces all possible channel states, i.e. a fast fading channel. The ergodic capacity i.e. loss suitable for the evaluation of spatial diversity techniques. The implicit time diversity provides already an infinite diversity level. Consequently, we do not see capacity advantages from additional spatial diversity. A more useful view in terms of diversity is outage capacity. This implies a slowly time varying channel, where each codeword faces only one channel state. More precisely, we use a quasistatic channel model, i.e. the channel is assumed to be constant during transmission of a block and changes independently from one block to the next. The x% outage capacity $C_x$ is the capacity, which is guaranteed in (100-x)% of the channel realizations, i.e. we expect an outage of x%.

The capacity implies Gaussian transmit symbols. How-ever, in real world systems, the transmit symbols will be taken from an M-QAM or M-PSK constellation. Taking this restriction on the transmit symbol alphabet into consideration, the capacity or mutual information, respectively, can be computed using the general formula for the conditional mutual information between the M-ary frequency domain transmit symbols $x(d) = [x_0(d), x_1(d),...]$ and received symbols $y(d)$ for a particular realization $\tilde{H}_k$ of the effective frequency domain channel:

$$I\left(x, y\middle|\tilde{H}_k\right) = \frac{1}{N_s + G} \sum_{d=0}^{N_s-1}\left[H(x(d)) - H\left(x(d)\middle|y(d), \tilde{H}_k(d)\right)\right]$$

where $H(x)$ and $H(x|y, \tilde{H}_k)$ denote the entropy and the conditional entropy, respectively, and $y(d)$, $y(d)$ and $\tilde{H}_k(d)$ refer to the transmitted symbols, received symbols and the SIMO channel, respectively, for sub-carrier $d$.

The transmit symbols $x_t$ are assumed to be equally likely, i.e. the entropy is given by

$$H(x(d)) = \log_2 M .$$

The conditional entropy is obtained from

$$H\left(x(d)\middle|y(d), \tilde{H}_k(d)\right) = -\mathcal{E}_{x_t(d), y(d)}\left\{p\left(x_t(d)\middle|y(d), \tilde{H}_k(d)\right)\right\}$$

$$= \mathcal{E}_{x_t(d), y(d)}\left\{\log_2 \frac{\sum_{x_t(d)\in C} p\left(y(d)\middle|x_t(d), \tilde{H}_k(d)\right)}{p\left(y(d)\middle|x_t(d), \tilde{H}_k(d)\right)}\right\}$$

where $\varepsilon_{x_t(d), y(d)}$ denotes expectation with respect to $x_t(d)$ and $y(d)$ and

$$p\left(y\middle|x_t, \tilde{H}_k\right) = \frac{1}{\left(2\pi\sigma^2\right)^{-n_R}} \exp\left(-\frac{\left\|y(d) - \tilde{H}_k(d)x_t(d)\right\|^2}{2\sigma^2}\right)$$

Similar as in the case of capacity for Gaussian transmit symbols, we can analyze the ergodic or outage mutual information.

Since modem wireless communication systems will use adaptive FEC coding and modulation, the code rates and modulation formats will be chosen adaptively, depending on criteria like current channel state or quality of service (QoS) requirements. The present invention provides, therefore, an adaptive cyclic delay diversity scheme, which uses the optimum cyclic delay according to e.g. a current code rate.

Furthermore, the inventive interleaving scheme can also be adapted in order to provide full spatial diversity.

The present invention further provides modes where cyclic delay may be chosen independently of the code rate such that the scheme is optimum in terms of capacity for all code rates.

In accordance with the present invention, cyclic delay is chosen depending on a code rate of the FEC code. The inventive scheme transforms the spatial diversity into frequency diversity between a minimum number of neighbouring sub-carriers, which is optimum for a current code rate. This will yield optimum FER performance in systems with adaptive coding using codes of limited constraint length.

The inventive cyclic delay diversity scheme enables exploiting spatial diversity in a coded OFDM system without increasing the receiver's complexity compared to a single antenna system. Moreover, guard interval need not to be exceeded. Furthermore, adaptive code rates are supported by adapting the cyclic delays to the chosen code rates such that the optimum cyclic delays for each code rate are chosen. Additionally, differential modulation in frequency domain is supported by the proposed adaptive choice of the cyclic delays.

The present invention further provides a transmitter apparatus a plurality of transmit sequences, comprising an encoder for encoding an information sequence using a coding scheme to obtain an encoded sequence, a de-multiplexer for de-multiplexing the encoded sequence into a number of streams of values in response to a control signal indicating the number of streams of values, for a stream of values, preferably for each stream of values, a mapper for mapping groups of stream values onto symbols according to a mapping scheme to obtain the number of streams of symbols, an assigner for assigning a number of successive symbols for each stream of symbols to a different set of successive sub-carriers to obtain a multicarrier sequence, a copier for providing a number of copies of the multi carrier sequence, for a copy of the multicarrier sequence, a variable phase shift element for introducing a variable phase shift into a copy of the multicarrier sequence to obtain a phase shifted copy of the multicarrier sequence, for a phase shifted copy of the multicarrier sequence, a frequency time transformer to obtain a transmit sequence of the plurality of transmit sequences, and a controller for providing a control signal indicating the number of streams or indicating a variable phase shift to be introduced into a copy of the multicarrier sequence in dependence on a transmission condition, e.g. a code rate.

Furthermore, the controller may be configured for providing a control signal indicating the number of copies of the multi carrier signal, and wherein the copier is configured for generating the number of copies of the multi carrier signal in response to the control signal.

In accordance with the present invention, each transmit sequence of the plurality of transmit sequences is to be transmitted by a different transmitting point including e.g. a transmit antenna, of a number of transmitting points, the number of transmitting points being equal to the number of transmit sequences. Therefore, the apparatus may comprise the number of transmitting points for transmitting the transmit sequences.

For example, the apparatus comprises a number of phase shift elements being equal to or less than the number of copies of the multicarrier sequence. For example, a first transmit sequence may correspond to an unshifted version of the multicarrier sequence. In this case, the number of phase shift elements is smaller than the number of copies of the multicarrier sequence. However, the number of phase shift elements may be equal to the number of copies of the multicarrier sequence for introducing a phase shift into each copy of the multicarrier sequence.

In accordance with the present invention, the transmit apparatus comprises the full functionality of the apparatus described with respect to Fig. 4. In particular, the encoder, the demultiplexer, the mapper, the assigner and the controller comprise the functionalities of the corresponding elements being described above, e.g. with respect to the corresponding elements being described with respect to Fig. 4.

In accordance with the present invention, the apparatus is configured for introducing the frequency diversity by the means of phase shifting, wherein the variable phase shifts correspond to the variable cyclic delays described above. Since a cyclic delay in time domain introduces a certain phase shift in frequency domain, the inventive variable cyclic delay diversity scheme may be replaced by a variable phase shift scheme, wherein the variable phase shifts are frequency domain representations of the cyclic shifts described above.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program products runs on a computer. In other words, the inventive methods are, therefore, a computer program having a program code for performing the inventive methods, when the computer program runs on a computer.

**Claims**

1. Apparatus for generating a plurality of output sequences from an input sequence for obtaining cyclic delay diversity, the apparatus comprising:

   a copier (101) for providing a plurality of copies of the input sequence;
   a cyclic shift element (107) for variably cyclically shifting a copy of the input sequence to obtain an output sequence of the plurality of output sequences, wherein
   the cyclic shift element (107) is configured for receiving a variable control signal indicating a number of values the copy of the input sequence is to be shifted by, and, in response to the variable control signal, for cyclically shifting the copy of the input sequence by the number of values,
   wherein the plurality of output sequences is to be transmitted by a plurality of transmit points through the plurality of varying channels, wherein the apparatus comprises a controller (111) being configured for generating the variable control signal in order to adapt the cyclic delay diversity to a variable transmission condition, and
   wherein the variable transmission condition comprises a code rate, wherein the controller (111) is configured for determining a number of values the copy of the input sequence is to be shifted by in dependence on the code rate.

2. Apparatus according to claim 1, wherein the variable transmission condition comprises a diversity coding gain or a coding scheme or a capacity of a channel or a channel state information or a capacity of an effective channel resulting when introducing cyclic delay diversity or a bit error rate or an available bandwidth or a number of user signal comprised by the input sequence in a multi-user scenario or a number of transmit points or a number of receive points or a modulation or a demodulation scheme or a quality of service requirement or a length of the input sequence.

3. Apparatus according to claims 1 to 2, wherein the variable transmission condition comprises different code rates, wherein the controller (111) is configured for determining the number of values the copy of the input sequence is to be shifted by in dependence on a code rate upper bounding different code rates.

4. Apparatus according to claims 1 to 3, wherein the controller (111) is configured for determining a number of values the copy of the input sequence is to be shifted by from a look-up table comprising different numbers of values for different code rates.

5. Apparatus according to claims 1 to 4, wherein the input sequence results from processing an information sequence, the information sequence being coded using a coding scheme, wherein the variable transmission condition is a code rate R associated with the coding scheme, wherein the controller (111) is configured for determining the number of values such that a number of different channel states is introduced to an effective channel, the effective channel resulting when transmitting the plurality of output sequences through the plurality of communication channels, wherein the number of different channel states S is chosen such that the following requirement is fulfilled

$$R \leq \frac{S - 1}{S}.$$

6. Apparatus according to claim 5, wherein the number of channel states determines a number of different sets of correlated coefficients of a transfer function of the effective channel, wherein coefficients belonging to different sets are at least partly uncorrelated.

7. Apparatus according to claims 1 to 6, wherein the input sequence comprises a multi-carrier sequence being frequency-time transformed using a $N_S$-point frequency-time transform, the multi-carrier sequence being obtained from an information sequence being coded using a coding scheme, the apparatus comprising a controller for generating the variable control signal indicating a number of values a n-th copy of the input sequence is to be shifted by, the number of values being derivable from the following equation,

$$\Delta_n = \frac{N_s}{S} + \Delta_{n-1}$$

wherein $\Delta_{n-1}$ denotes a number of values a (n-1)-th copy of the input sequences to be shifted by and wherein S denotes a number of different channel states.

8. Apparatus according to claims 1 to 7, wherein the variable transmission condition comprises a capacity of an effective channel, the effective channel resulting when transforming the plurality of output sequences through the plurality of channels, wherein the capacity of the effective channel depends on a number of values a copy of the input sequence is to be shifted by, wherein the controller is configured for determining the number of values such that the capacity of the effective channel is increased.

9. Apparatus according to claim 8, wherein the controller is configured for determining the number of values only from a set of values comprising values having a greatest common divisor being equal to 1.

10. Apparatus according to claims 1 to 9, the apparatus comprising a controller, the controller being configured for determining the number of values on the basis of a channel state information in order to control the cyclical shift of the copy of the input sequence in dependence on the channel state information.

11. Transmitter apparatus, comprising:

   a processor for processing an information sequence using a processing scheme to obtain an input sequence; the apparatus according to claims 1 to 10 for generating a plurality of output sequences from the input sequence to obtain cyclic delay diversity, the plurality of output sequences to be transmitted by a plurality of transmit points, wherein the apparatus for generating the plurality of output sequences comprises a controller for controlling the cyclic shift element in order to adapt a number of values, a copy of the input sequence is to be shifted by, to the processing scheme.

12. Transmitter apparatus according to claim 11, wherein the processor comprises an encoder for encoding the information sequence using a coding scheme, wherein the controller is configured for controlling the number of values a copy of the input sequences is to be shifted by for adapting the cyclic delay diversity to the coding scheme.

13. Transmitter apparatus according to claim 12, wherein the coding scheme is associated with a code rate, wherein the controller is configured for controlling the number of values a copy of the input sequence is to be shifted by in dependence on the code rate.

14. Transmitter apparatus according to claim 12 or 13, the controller being configured for determining the coding scheme in dependence on a transmission condition and for determining the number of values in dependence on the coding scheme.

15. Transmitter apparatus according to claims 11 to 14, the processor comprising:

   an encoder for encoding the information sequence using a coding scheme to obtain an encoded sequence;
   a de-multiplexer for de-multiplexing the encoded sequence into a number of streams of values in response to a control signal indicating the number of streams of values;
   for each stream of values, a mapper for mapping groups of stream values onto symbols according to a mapping scheme to obtain the number of streams of symbols;
   an assigner for assigning a number of successive symbols of each stream of symbols to a different set of successive sub-carriers to obtain a multi-carrier signal.
   a frequency-time transformer for transforming the multi-carrier signal to obtain the input sequence;
   wherein the controller is configured for providing the control signal indicating the number of streams of values, the number of streams of values depending on the coding scheme.

16. Apparatus for generating an output sequence from $n_T$ input sequences for obtaining cyclic delay diversity, wherein the input sequences are received by a plurality of receive points through a plurality of varying channels, the apparatus comprising:

   a controller being configured for generating a variable control signal in order to adapt the cyclic delay diversity to a variable transmission condition, wherein the variable transmission condition comprises a code rate, wherein the controller is configured for determining a number of values the copy of the input sequences are to be shifted by in dependence on the code rate;
   $n_T$-1 cyclic shift elements for variably cyclically shifting $n_T$-1 input sequences to obtain $n_T$-1 shifted sequences, wherein each cyclic shift element is configured for receiving the variable control signal indicating a number of values an input sequence is to be shifted by, and, in response to the variable control signal, for cyclically shifting the input sequence by the number of values; and
   an adder for adding the $n_T$-1 shifted sequences and a first input sequence or a shifted version thereof to obtain the output sequence.

17. Method for generating a plurality of output sequences from an input sequence for obtaining cyclic delay diversity, wherein the plurality of output sequences is to be transmitted by a plurality of transmit points through a plurality of varying channels, the method comprising:

   providing a plurality of copies of the input sequence;
   generating a variable control signal in order to adapt the cyclic delay diversity to a variable transmission condition, wherein the variable transmission condition comprises a code rate;
wherein the step of generating comprises the step of determining a number of values the copy of the input sequence is to be shifted by in dependence on the code rate; and
variably cyclically shifting a copy of the input sequence to obtain an output sequence of the plurality of output sequences upon receiving the variable control signal indicating a number of values the copy of the input sequence is to be shifted by, and, in response to the variable control signal, for cyclically shifting the copy of the input sequence by the number of values.

**18.** Method, comprising:

processing an information sequence using a processing scheme to obtain an input sequence;
generating a plurality of output sequences from the input sequence according to the method of claim 17;
controlling the cyclically shifting a copy of the input sequence in order to adapt a number of values a copy of the input sequence is to be shifted by to the processing scheme.

**19.** Method for generating an output sequence from $n_T$ input sequences for obtaining cyclic delay diversity, wherein the input sequences are received by a plurality of receive points through a plurality of varying channels, the method comprising:

generating a variable control signal in order to adapt the cyclic delay diversity to a variable reception condition, wherein the variable transmission condition comprises a code rate, wherein the step of generating comprises determining a number of values the copy of the input sequences are to be shifted by in dependence on the code rate;
receiving the variable control signal indicating a number of values an input sequence is to be shifted by, and, in response to the variable control signal, variably cyclically shifting $n_T$-1 input sequences to obtain $n_T$ shifted sequences; and
adding the $n_T$-1 shifted sequences and a first input sequence or a shifted version thereof to obtain the output sequence.

**20.** Computer program comprising program means for performing the steps of at least one of the methods of claim 17 to 19, when the computer program runs on a computer.


**Patentansprüche**

**1.** Vorrichtung zum Erzeugen einer Mehrzahl von Ausgangssequenzen aus einer Eingangssequenz zum Erhalten einer zyklischen Verzögerungsdiversität, wobei die Vorrichtung folgende Merkmale aufweist:

einen Kopierer (101) zum Liefern einer Mehrzahl von Kopien der Eingangssequenz;
ein zyklisches Schiebeelement (107) zum variablen zyklischen Schieben einer Kopie der Eingangssequenz, um eine Ausgangssequenz der Mehrzahl von Ausgangssequenzen zu erhalten, wobei
das zyklische Schiebeelement (107) konfiguriert ist, um ein variables Steuersignal zu empfangen, das eine Anzahl von Werten anzeigt, um die die Kopie der Eingangssequenz verschoben werden soll, und ansprechend auf das variable Steuersignal, zum zyklischen Verschieben der Kopie der Eingangssequenz um die Anzahl von Werten,
wobei die Mehrzahl von Ausgangssequenzen durch eine Mehrzahl von Sendepunkten durch die Mehrzahl von variierenden Kanälen gesendet werden soll, wobei die Vorrichtung eine Steuerung (111) aufweist, die zum Erzeugen des variablen Steuersignals konfiguriert ist, um die zyklische Verzögerungsdiversität an eine variable Sendebedingung anzupassen,
wobei die variable Sendebedingung eine Coderate aufweist, wobei die Steuerung (111) konfiguriert ist, um eine Anzahl von Werten zu bestimmen, um die die Kopie der Eingangssequenz verschoben werden soll, abhängig von der Coderate.

**2.** Vorrichtung gemäß Anspruch 1, bei der die variable Sendebedingung einen Diversitätscodierungsgewinn oder ein Codierungsschema oder eine Kapazität eines Kanals oder Kanalzustandsinformationen oder eine Kapazität eines effektiven Kanals die resultiert, wenn eine zyklische Verzögerungsdiversität eingebracht wird, oder eine Bitfehlerrate oder eine verfügbare Bandbreite oder eine Anzahl von Benutzersignalen, die in der Eingangssequenz bei einem Mehrbenutzerszenario enthalten sind, oder eine Anzahl von Sendepunkten oder eine Anzahl von Empfangspunkten oder ein Modulations- oder ein Demodulations-Schema oder eine Dienstqualitätsanforderung oder eine Länge der Eingangssequenz aufweist.

3. Vorrichtung gemäß Anspruch 1 oder 2, bei der die variable Sendebedingung unterschiedliche Coderaten aufweist, wobei die Steuerung (111) konfiguriert ist zum Bestimmen der Anzahl von Werten, um die die Kopie der Eingangssequenz verschoben werden soll, abhängig von einer Coderatenoberbegrenzung unterschiedlicher Coderaten.

4. Vorrichtung gemäß einem der Ansprüche 1 bis 3, bei der die Steuerung (111) zum Bestimmen einer Anzahl von Werten konfiguriert ist, um die die Kopie der Eingangssequenz verschoben werden soll, aus einer Nachschlagtabelle, die unterschiedliche Zahlen von Werten für unterschiedliche Coderaten aufweist.

5. Vorrichtung gemäß einem der Ansprüche 1 bis 4, bei der die Eingangssequenz aus der Verarbeitung einer Informationssequenz resultiert, wobei die Informationssequenz unter Verwendung eines Codierungsschemas codiert ist, wobei die variable Sendebedingung eine Coderate R ist, die dem Codierungsschema zugeordnet ist, wobei die Steuerung (111) zum Bestimmen der Anzahl von Werten konfiguriert ist, derart, dass eine Anzahl unterschiedlicher Kanalzustände in einen effektiven Kanal eingebracht ist, wobei der effektive Kanal resultiert, wenn die Mehrzahl von Ausgangssequenzen durch die Mehrzahl von Kommunikationskanälen übertragen werden, wobei die Anzahl unterschiedlicher Kanalzustände S derart ausgewählt ist, dass die nachfolgende Anforderung erfüllt ist.

$$R \leq \frac{S-1}{S}.$$

6. Vorrichtung gemäß Anspruch 5, bei der die Anzahl von Kanalzuständen eine Anzahl unterschiedlicher Sätze aus korrelierten Koeffizienten einer Übertragungsfunktion des effektiven Kanals bestimmt, wobei Koeffizienten, die zu unterschiedlichen Sätzen gehören, zumindest teilweise unkorreliert sind.

7. Vorrichtung gemäß einem der Ansprüche 1 bis 6, bei der die Eingangssequenz eine Mehrfachträgersequenz aufweist, die Frequenz-Zeit transformiert ist, unter Verwendung einer $N_S$-Punkt-Frequenz-Zeit-Transformation, wobei die Mehrfachträgersequenz aus einer Informationssequenz erhalten wird, die unter Verwendung eines Codierungsschemas codiert ist, wobei die Vorrichtung eine Steuerung zum Erzeugen des variablen Steuerungssignals aufweist, das eine Anzahl von Werten anzeigt, um die eine n-te Kopie der Eingangssequenz verschoben werden soll, wobei die Anzahl aus Werten aus der folgenden Gleichung hergeleitet werden kann:

$$\Delta_n = \frac{N_S}{S} + \Delta_{n-1}$$

wobei $\Delta_{n-1}$ eine Anzahl von Werten bezeichnet, um die eine (n-1)-te Kopie der Eingangssequenzen verschoben werden soll, und wobei S eine Anzahl unterschiedlicher Kanalzustände bezeichnet.

8. Vorrichtung gemäß einem der Ansprüche 1 bis 7, bei der die variable Sendebedingung eine Kapazität eines effektiven Kanals aufweist, wobei der effektive Kanal resultiert, wenn die Mehrzahl von Ausgangssequenzen durch die Mehrzahl von Kanälen transformiert wird, wobei die Kapazität des effektiven Kanals von einer Anzahl von Werten abhängt, um die eine Kopie der Eingangssequenz verschoben werden soll, wobei die Steuerung konfiguriert ist, um die Anzahl von Werten derart zu bestimmen, dass die Kapazität des effektiven Kanals erhöht wird.

9. Vorrichtung gemäß Anspruch 8, bei der die Steuerung konfiguriert ist, um die Anzahl von Werten nur aus einem Satz von Werten zu bestimmen, die Werte aufweisen, die einen größten gemeinsamen Teiler gleich Eins aufweisen.

10. Vorrichtung gemäß einem der Ansprüche 1 bis 9, wobei die Vorrichtung eine Steuerung aufweist, wobei die Steuerung konfiguriert ist, um die Anzahl von Werten auf der Basis von Kanalzustandsinformationen zu bestimmen, um die zyklische Verschiebung der Kopie der Eingangssequenz abhängig von den Kanalzustandsinformationen zu steuern.

**11.** Sendervorrichtung, die folgende Merkmale aufweist:

einen Prozessor zum Verarbeiten einer Informationssequenz unter Verwendung eines Verarbeitungsschemas, um eine Eingangssequenz zu erhalten; die Vorrichtung gemäß einem der Ansprüche 1 bis 10 zum Erzeugen einer Mehrzahl von Ausgangssequenzen aus der Eingangssequenz, um eine zyklische Verzögerungsdiversität zu erhalten, wobei die Mehrzahl von Ausgangssequenzen durch eine Mehrzahl von Sendepunkten gesendet werden soll, wobei die Vorrichtung zum Erzeugen der Mehrzahl von Ausgangssequenzen eine Steuerung zum Steuern des zyklischen Schiebeelements aufweist, um die Anzahl von Werten, um die eine Kopie der Eingangssequenz verschoben werden soll, an das Verarbeitungsschema anzupassen.

**12.** Sendervorrichtung gemäß Anspruch 11, bei der der Prozessor einen Codierer zum Codieren der Informationssequenz unter Verwendung eines Codierungsschemas aufweist, wobei die Steuerung zum Steuern der Anzahl von Werten konfiguriert ist, um die eine Kopie der Eingangssequenz verschoben werden soll, zum Anpassen der zyklischen Verzögerungsdiversität an das Codierungsschema.

**13.** Sendervorrichtung gemäß Anspruch 12, bei der das Codierungsschema einer Coderate zugeordnet ist, wobei die Steuerung konfiguriert ist, um die Anzahl von Werten zu steuern, um die eine Kopie der Eingangssequenz verschoben werden soll, abhängig von der Coderate.

**14.** Sendervorrichtung gemäß Anspruch 12 oder 13, bei der die Steuerung konfiguriert ist, um das Codierungsschema abhängig von einer Sendebedingung zu bestimmen, und um die Anzahl von Werten abhängig von dem Codierungsschema zu bestimmen.

**15.** Sendervorrichtung gemäß einem der Ansprüche 11 bis 14, bei der der Prozessor folgende Merkmale aufweist:

einen Codierer zum Codieren der Informationssequenz unter Verwendung eines Codierungsschemas, um eine codierte Sequenz zu erhalten; einen Demultiplexer zum Demultiplexen der codierten Sequenz in eine Anzahl von Strömen von Werten ansprechend auf ein Steuersignal, das die Anzahl von Strömen von Werten anzeigt; für jeden Strom aus Werten, eine Abbildungseinrichtung zum Abbilden von Gruppen aus Stromwerten auf Symbole gemäß einem Abbildungsschema, um die Anzahl von Strömen von Symbolen zu erhalten; eine Zuordnungseinrichtung zum Zuordnen einer Anzahl von aufeinander folgenden Symbolen jedes Stroms aus Symbolen zu einem unterschiedlichen Satz aus aufeinander folgenden Teilträgern, um ein Mehrfachträgersignal zu erhalten; einen Frequenz-Zeit-Transformator, um das Mehrfachträgersignal zu transformieren, um die Eingangssequenz zu erhalten; wobei die Steuerung konfiguriert ist, um das Steuersignal zu liefern, das die Anzahl von Strömen von Werten anzeigt, wobei die Anzahl von Strömen von Werten von dem Codierungsschema abhängt.

**16.** Vorrichtung zum Erzeugen einer Ausgangssequenz aus $n_T$ Eingangssequenzen zum Erhalten einer zyklischen Verzögerungsdiversität, wobei die Eingangssequenzen durch eine Mehrzahl von Empfangpunkten durch eine Mehrzahl von variierenden Kanälen empfangen werden, wobei die Vorrichtung folgende Merkmale aufweist:

eine Steuerung, die zum Erzeugen eines variablen Steuersignals konfiguriert ist, um die zyklische Verzögerungsdiversität an eine variable Sendebedingung anzupassen, wobei die variable Sendebedingung eine Coderate aufweist, wobei die Steuerung konfiguriert ist, um eine Anzahl von Werten zu bestimmen, um die die Kopie der Eingangssequenzen verschoben werden soll, abhängig von der Coderate; $n_T$-1 zyklische Schiebeelemente zum variablen zyklischen Verschieben von $n_T$-1 Eingangssequenzen, um $n_T$-1 verschobene Sequenzen zu erhalten, wobei jedes zyklische Schiebeelement konfiguriert ist, um das variable Steuersignal zu empfangen, das eine Anzahl von Werten anzeigt, um die eine Eingangssequenz verschoben werden soll, und, ansprechend auf das variable Steuersignal, zum zyklischen Verschieben der Eingangssequenz um die Anzahl von Werten; und einen Addierer zum Addieren der $n_T$-1 verschobenen Sequenzen und einer ersten Eingangssequenz oder einer verschobenen Version derselben, um die Ausgangssequenz zu erhalten.

**17.** Verfahren zum Erzeugen einer Mehrzahl von Ausgangssequenzen aus einer Eingangssequenz, um eine zyklische Verzögerungsdiversität zu erhalten, wobei die Mehrzahl von Ausgangssequenzen durch eine Mehrzahl von Sendepunkten durch eine Mehrzahl variierender Kanäle gesendet werden soll, wobei das Verfahren folgende Schritte aufweist:

Bereitstellen einer Mehrzahl von Kopien der Eingangssequenz;

Erzeugen eines variablen Steuersignals, um die zyklische Verzögerungsdiversität an eine variable Sendebedingung anzupassen, wobei die variable Sendebedingung eine Coderate aufweist,

wobei der Schritt des Erzeugens den Schritt des Bestimmens einer Anzahl von Werten aufweist, um die die Kopie der Eingangssequenz verschoben werden soll, abhängig von der Coderate; und

variables, zyklisches Verschieben einer Kopie der Eingangssequenz, um eine Ausgangssequenz der Mehrzahl von Ausgangssequenzen auf das Empfangen des variablen Steuersignals hin zu erhalten, das eine Anzahl von Werten anzeigt, um die die Kopie der Eingangssequenz verschoben werden soll, und, ansprechend auf das variable Steuersignal, zum zyklischen Verschieben der Kopie der Eingangssequenz um die Anzahl von Werten.

18. Verfahren, das folgende Schritte aufweist:

Verarbeiten einer Informationssequenz unter Verwendung eines Verarbeitungsschemas, um eine Eingangssequenz zu erhalten;

Erzeugen einer Mehrzahl von Ausgangssequenzen aus der Eingangssequenz gemäß dem Verfahren von Anspruch 17;

Steuern der zyklischen Verschiebung einer Kopie der Eingangssequenz, um eine Anzahl von Werten, um die eine Kopie der Eingangssequenz verschoben werden soll, an das Verarbeitungsschema anzupassen.

19. Verfahren zum Erzeugen einer Ausgangssequenz aus $n_T$ Eingangssequenzen, um eine zyklische Verzögerungsdiversität zu erhalten, wobei die Eingangssequenzen durch eine Mehrzahl von Empfangspunkten durch eine Mehrzahl von variierenden Kanälen empfangen werden, wobei das Verfahren folgende Schritte aufweist:

Erzeugen eines variablen Steuersignals, um die zyklische Verzögerungsdiversität an eine variable Empfangsbedingung anzupassen, wobei die variable Sendebedingung eine Coderate aufweist, wobei der Schritt des Erzeugens das Bestimmen einer Anzahl von Werten aufweist, um die die Kopie der Eingangssequenzen verschoben werden soll, abhängig von der Coderate;

Empfangen des variablen Steuersignals, das eine Anzahl von Werten anzeigt, um die eine Eingangssequenz verschoben werden soll, und ansprechend auf das variable Steuersignal, variables zyklisches Verschieben von $n_T$-1 Eingangssequenzen, um $n_T$ verschobene Sequenzen zu erhalten; und

Addieren der $n_T$-1 verschobenen Sequenzen und einer ersten Eingangssequenz oder einer verschobenen Version derselben, um die Ausgangssequenz zu erhalten.

20. Computerprogramm, das eine Programmeinrichtung zum Ausführen der Schritte von zumindest einem der Verfahren von Anspruch 17 bis 19 aufweist, wenn das Computerprogramm auf einem Computer ausgeführt wird.

**Revendications**

1. Appareil pour générer une pluralité de séquences de sortie à partir d'une séquence d'entrée, pour obtenir une diversité de retards cycliques, l'appareil comprenant:

un copieur (101) destiné à fournir une pluralité de copies de la séquence de sortie;

un élément de décalage cyclique (107) destiné à décaler cycliquement de manière variable une copie de la séquence d'entrée, pour obtenir une séquence de sortie de la pluralité de séquences de sortie, où

l'élément de décalage cyclique (107) est configuré de manière à recevoir un signal de commande variable indiquant un nombre de valeurs duquel doit être décalée la copie de la séquence d'entrée et, en réponse au signal de commande variable, à décaler cycliquement la copie de la séquence d'entrée du nombre de valeurs, dans lequel la pluralité de séquences de sortie doivent être transmises par une pluralité de points de transmission via la pluralité de canaux variables, dans lequel l'appareil comprend un contrôleur (111) configuré pour générer le signal de commande variable, afin d'adapter la diversité de retards cycliques à une condition de transmission variable, et

dans lequel la condition de transmission variable comprend un débit de code, dans lequel le contrôleur (111) est configuré pour déterminer un nombre de valeurs duquel doit être décalée la copie de la séquence d'entrée en fonction du débit de code.

2.  Appareil selon la revendication 1, dans lequel la condition de transmission variable comprend un gain de codage de diversité ou un schéma de codage ou une capacité d'un canal ou une information d'état de canal ou une capacité d'un canal effectif résultant lors de l'introduction d'une diversité de retards cycliques ou un taux d'erreur sur le bit ou une largeur de bande disponible ou un nombre de signaux d'utilisateur que comprend la séquence d'entrée dans un scénario à utilisateurs multiples ou un nombre de points de transmission ou un nombre de points de réception ou un schéma de modulation ou de démodulation ou une qualité de condition de service requise ou une longueur de la séquence d'entrée.

3.  Appareil selon les revendications 1 à 2, dans lequel la condition de transmission variable comprend différents débit de code, dans lequel le contrôleur (111) est configuré de manière à déterminer le nombre de valeurs duquel doit être décalée la copie de la séquence d'entrée en fonction d'un débit de code constituant la limite supérieure de différents débits de code.

4.  Appareil selon les revendications 1 à 3, dans lequel le contrôleur (111) est configuré de manière à déterminer un nombre de valeurs duquel doit être décalée la copie de la séquence d'entrée à partir d'un tableau de consultation comprenant différents nombres de valeurs pour différents débits de code.

5.  Appareil selon les revendications 1 à 4, dans lequel la séquence d'entrée résulte du traitement d'une séquence d'informations, la séquence d'informations étant codée à l'aide d'un schéma de codage, dans lequel la condition de transmission variable est un débit de code R associé au schéma de codage, dans lequel le contrôleur (111) est configuré de manière à déterminer le nombre de valeurs de sorte qu'un nombre d'états de canal différents soient introduits dans un canal effectif, le canal effectif résultant lors de la transmission de la pluralité de séquences de sortie via la pluralité de canaux de communication, dans lequel le nombre d'états de canal différents S est choisi tel que soit remplie la condition requise suivante

$$R \leq \frac{S-1}{S}.$$

6.  Appareil selon la revendication 5, dans lequel le nombre d'états de canal détermine un nombre d'ensembles différents de coefficients corrélés d'une fonction de transfert du canal effectif, dans lequel les coefficients appartenant à des ensembles différents sont au moins partiellement non corrélés.

7.  Appareil selon les revendications 1 à 6, dans lequel la séquence d'entrée comprend une séquence de porteuses multiples transformée fréquence-temps à l'aide d'une transformée fréquence-temps à $N_s$ points, la séquence de porteuses multiples étant obtenue à partir d'une séquence d'informations codée à l'aide d'un schéma de codage, l'appareil comprenant un contrôleur destiné à générer le signal de commande variable indiquant un nombre de valeurs duquel doit être décalée une n-ième copie de la séquence d'entrée, le nombre de valeurs pouvant être dérivé de l'équation suivante,

$$\Delta_n = \frac{N_s}{S} + \Delta_{n-1}$$

dans lequel $A_{n-1}$ désigne un nombre de valeurs duquel doit être décalée une (n-1)-ième copie des séquences d'entrée et dans lequel S désigne un nombre d'états de canal différents.

8.  Appareil selon les revendications 1 à 7, dans lequel la condition de transmission variable comprend une capacité d'un canal effectif, le canal effectif résultant lors de la transformation de la pluralité de séquences de sortie via la pluralité de canaux, dans lequel la capacité du canal effectif dépend du nombre de valeurs duquel doit être décalée une copie de la séquence d'entrée, dans lequel le contrôleur est configuré de manière à déterminer le nombre de valeurs de sorte que la capacité du canal effectif soit augmenté.

**9.** Appareil selon la revendication 8, dans lequel le contrôleur est configuré de manière à déterminer le nombre de valeurs uniquement parmi un ensemble de valeurs comprenant des valeurs ayant un diviseur commun le plus grand égal à 1.

**10.** Appareil selon les revendications 1 à 9, l'appareil comprenant un contrôleur, le contrôleur étant configuré de manière à déterminer le nombre de valeurs sur base d'une information d'état de canal, pour commander le décalage cyclique de la copie de la séquence d'entrée en fonction de l'information d'état de canal.

**11.** Appareil émetteur, comprenant:

un processeur destiné à traiter une séquence d'informations à l'aide d'un schéma de traitement, pour obtenir une séquence d'entrée;
l'appareil selon les revendications 1 à 10 pour générer une pluralité de séquences de sortie à partir de la séquence d'entrée, pour obtenir une diversité de retards cycliques, la pluralité de séquences de sortie étant à transmettre par une pluralité de points de transmission, où l'appareil pour générer la pluralité de séquences de sortie comprend un contrôleur pour commander l'élément de décalage cyclique, pour adapter au schéma de traitement un nombre de valeurs duquel doit être décalée une copie de la séquence d'entrée.

**12.** Appareil émetteur selon la revendication 11, dans lequel le processeur comprend un codeur destiné à coder la séquence d'informations à l'aide d'un schéma de codage, dans lequel le contrôleur est configuré pour commander le nombre de valeurs duquel doit être décalée une copie des séquences d'entrée pour adapter la diversité de retards cycliques au schéma de codage.

**13.** Appareil émetteur selon la revendication 12, dans lequel le schéma de codage est associé à un débit de code, dans lequel le contrôleur est configuré de manière à commander le nombre de valeurs duquel doit être décalée une copie de la séquence d'entrée en fonction du débit de code.

**14.** Appareil émetteur selon la revendication 12 ou 13, le contrôleur étant configuré de manière à déterminer le schéma de codage en fonction d'une condition de transmission et à déterminer le nombre de valeurs en fonction du schéma de codage.

**15.** Appareil émetteur selon les revendications 11 à 14, le processeur comprenant:

un codeur destiné à coder la séquence d'informations à l'aide d'un schéma de codage, pour obtenir une séquence codée;
un démultiplexeur destiné à démultiplexer la séquence codée en un nombre de courants de valeurs en réponse à un signal de commande indiquant le nombre de courants de valeurs;
pour chaque courant de valeurs, un moyen de mappage destiné à effectuer un mappage de groupes de courants de valeurs sur des symboles selon un schéma de mappage, pour obtenir le nombre de courants de symboles;
un attributeur destiné à attribuer un nombre de symboles successifs de chaque courant de symboles à un ensemble différent de sous-porteuses successives, pour obtenir un signal à porteuses multiples;
un transformateur fréquence-temps destiné à transformer le signal à porteuses multiples, pour obtenir la séquence d'entrée;
dans lequel le contrôleur est configuré de manière à fournir le signal de commande indiquant le nombre de courants de valeurs, le nombre de courants de valeurs étant fonction du schéma de codage.

**16.** Appareil pour générer une séquence de sortie à partir de $n_T$ séquences d'entrée, pour obtenir une diversité de retards cycliques, dans lequel les séquences d'entrée sont reçues par une pluralité de points de réception via une pluralité de canaux variables, l'appareil comprenant:

un contrôleur configuré pour générer un signal de commande variable afin d'adapter la diversité de retards cycliques à une condition de transmission variable, où la condition de transmission variable comprend un débit de code, où le contrôleur est configuré pour déterminer un nombre de valeurs duquel doit être décalée la copie des séquences d'entrée en fonction du débit de code;
$n_T$-1 éléments de décalage cyclique destinés à décaler de manière cyclique et variable $n_T$-1 séquences d'entrée, pour obtenir $n_T$-1 séquences décalées, où chaque élément de décalage cyclique est configuré de manière à recevoir le signal de commande variable indiquant un nombre de valeurs duquel doit être décalée une séquence d'entrée et, en réponse au signal de commande variable, pour décaler cycliquement la séquence d'entrée du nombre de valeurs; et

un additionneur destiné à additionner les $n_T$-1 séquences décalées et une première séquence d'entrée ou une version décalée de celle-ci, pour obtenir la séquence de sortie.

17. Procédé pour générer une pluralité de séquences de sortie à partir d'une séquence d'entrée, pour obtenir une diversité de retards cycliques, dans lequel la pluralité de séquences de sortie doivent être transmises par une pluralité de points de transmission via une pluralité de canaux variables, le procédé comprenant:

fournir une pluralité de copies de la séquence d'entrée;

générer un signal de commande variable pour adapter la diversité de retards cycliques à une condition de transmission variable, où la condition de transmission variable comprend un débit de code,

dans lequel l'étape consistant à générer comprend l'étape consistant à déterminer un nombre de valeurs duquel doit être décalée la copie de la séquence d'entrée en fonction du débit de code; et

décaler de manière cyclique et variable une copie de la séquence d'entrée, pour obtenir une séquence de sortie de la pluralité de séquences de sortie à la réception du signal de commande variable indiquant un nombre de valeurs duquel doit être décalée la copie de la séquence d'entrée et, en réponse au signal de commande variable, pour décaler cycliquement la copie de la séquence d'entrée du nombre de valeurs.

18. Procédé, comprenant:

traiter une séquence d'informations à l'aide d'un schéma de traitement, pour obtenir une séquence d'entrée;

générer une pluralité de séquences de sortie à partir de la séquence d'entrée selon le procédé de la revendication 17;

commander le décalage cyclique d'une copie de la séquence d'entrée, pour adapter un nombre de valeurs duquel doit être décalée une copie de la séquence d'entrée par le schéma de traitement.

19. Procédé pour générer une séquence de sortie à partir de $n_T$ séquences d'entrée, pour obtenir une diversité de retards cycliques, dans lequel les séquences d'entrée sont reçues par une pluralité de points de réception via une pluralité de canaux variables, le procédé comprenant:

générer un signal de commande variable pour adapter la diversité de retards cycliques à une condition de réception variable, où la condition de transmission variable comprend un débit de code, où l'étape consistant à générer comprend la détermination d'un nombre de valeurs duquel doit être décalée la copie des séquences d'entrée en fonction du débit de code;

recevoir le signal de commande variable indiquant un nombre de valeurs duquel doit être décalée une séquence d'entrée et, en réponse au signal de commande variable, décaler de manière cyclique et variable $n_T$-1 séquences d'entrée, pour obtenir $n_T$ séquences décalées; et

additionner les $n_T$-1 séquences décalées et une première séquence d'entrée ou une version décalée de celle-ci, pour obtenir la séquence de sortie.

20. Programme d'ordinateur comprenant un moyen de programme pour réaliser les étapes d'au moins l'un des procédés des revendications 17 à 19 lorsque le programme d'ordinateur est exécuté sur un ordinateur.

FIG. 1

EP 1 782 553 B1

| Type | $n_t$ | $\Delta A_t$ | $\Delta T_t$ |
|------|-------|--------------|--------------|
| flat | 1 | – | – |
| uniform | D+1 | 0 dB | $T_S$ |
| 2 tabs exp | 2 | 3 dB | $DT_S$ |
| 12 tabs exp | 12 | 1 dB | $xT_S$ |

FIG. 2a

FIG. 2b

FIG. 2c

FIG. 3a

FIG. 3b

FIG. 4

| R | S |
|---|---|
| $R \leq 1/2$ | 2 |
| $R \leq 3/4$ | 4 |
| $R \leq 7/8$ | 8 |
| $R \leq 15/16$ | 16 |
| $R \leq 31/32$ | 32 |

FIG. 5

$\widetilde{X}_3\widetilde{X}_2\widetilde{X}_1\widetilde{X}_0$  GI  $h_t^{(1)}$

FEC encoder  →  Π  →  Modulator  →  IFFT

$\Delta_2$  $\widetilde{X}_2\widetilde{X}_1\widetilde{X}_0\widetilde{X}_3$  GI  $h_t^{(2)}$

$\Delta_{nT}$  $\widetilde{X}_1\widetilde{X}_0\widetilde{X}_3\widetilde{X}_2$  GI  $h_t^{(n_T)}$

FIG. 6

GI  →  FFT  →  Demodulator  →  $\Pi^{-1}$  →  FEC decoder

FIG. 7

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004025874 A
- US 20040087294 A
- US 6377632 A

### Non-patent literature cited in the description

- **A.DAMMANN ; S. KAISER.** *IEEE Globecom,* November 2001, 3100-3105
- **A. DAMMANN ; R. RAULEFS ; S. KAISER.** *4th International ITG Conference on Source and Channel Coding,* January 2002, 253-259
- **D. GORE ; S. SANDHU ; A. PAULRAJ.** *IEEE International Conference on Communications,* April 2002, 165-171
- International Conference on Communications. *IEEE,* April 2002, 1949-1953
- **G. BAUCH ; G. AUER.** Multi-stream differential modulation for cyclic delay diversity in OFDM. *IEEE International Conference on Communications,* June 2004
- *IEEE International Symposium on Personal, Indoor and Mobile Radio Communications,* September 2004
- **G. BAUCH ; J.S. MALIK.** Parameter optimization, interleaving and multiple access in OFDM with cyclic delay diversity. *IEEE Vehicular Technology Conference,* May 2004
- **G. BAUCH ; J S. MALIK.** Orthogonal frequency division multiple access with cyclic delay diversity. *ITG Workshop on Smart Antennas,* March 2004
- **J.S. MALIK.** *Cyclic delay diversity in OFDM,* September 2003
- **G. BAUCH.** Multi-stream differential modulation for cyclic delay diversity in OFDM. *IEEE International Conference on Communications,* June 2004